# EUROPEAN PATENT SPECIFICATION

(11) **EP 4 000 372 B1**
(45) Date of publication and mention of the grant of the patent: **21.05.2025**
(21) Application number: 21202371.7
(22) Date of filing: 13.10.2021
(51) Int. Cl.: A01D 34/74

(54) **WORK VEHICLE**
NUTZFAHRZEUG
ENGIN DE TRAVAIL

(30) Priority: 11.11.2020 JP 2020188098
(43) Date of publication of application: 25.05.2022
(73) Proprietor: Iseki & Co., Ltd., Matsuyama-shi, Ehime 799-2692 (JP)
(72) Inventor: BABA, Yusuke, Iyo-gun, 791-2193 (JP); BABA, Hirotaka, Iyo-gun, 791-2193 (JP)
(74) Representative: TBK

(56) References cited:
- EP-A1- 2 491 781
- JP-A- 2012 044 929
- US-A1- 2005 044 836
- US-A1- 2011 120 072
- US-A1- 2020 120 866

## Description

### BACKGROUND OF THE INVENTION

### 1. Field of the Invention

The present invention relates to a work vehicle such as a mower.

### 2. Description of the Related Art

EP 2 491 781 A1 discloses a work vehicle as specified in the preamble of claim 1.

From JP 2019 80547 A, there is known a work vehicle in which a front wheel portion that is in contact with ground during work is provided in front of a mower deck, the mower deck is supported so as to be suspended from an arm connected to the front wheel portion, an adjustment unit that adjusts a positional relationship between the front wheel portion in contact with the ground and the mower deck is provided on an upper portion of the mower deck, and a mowing height during the work can be adjusted by manually operating the adjustment unit in a state where the mower deck is raised.

However, in JP 2019 80547 A, when the mowing height is to be adjusted, it is necessary to temporarily raise the mower deck and then get off the vehicle to manually adjust the mowing height, which is troublesome in operation.

In order to solve this problem, there may be provided a work vehicle including a mower deck in which an electric hydraulic cylinder is provided on the mower deck and is connected to an arm connected to a front wheel portion via a link such that a mowing height can be electrically changed by a switch operation. However, it is difficult to confirm how much the current mowing height is adjusted because of the electric switch operation.

### SUMMARY OF THE INVENTION

An object of the invention is to provide a work vehicle capable of easily confirming how much a current mowing height is adjusted.

The invention provides a work vehicle according to claim 1. Preferred embodiments are provided in the dependent claims.

### BRIEF DESCRIPTION OF THE DRAWINGS

FIG. 1 is a side view of a work vehicle according to an embodiment of the invention.
FIG. 2 is a perspective view of a mower unit of the work vehicle.
FIG. 3 is a perspective view of a right front portion of the mower unit in a state where a cylinder cover is removed.
FIG. 4 is a perspective view of the mower unit as viewed from an inside to a right side.
FIG. 5 is an enlarged view of a part of FIG. 4.
FIG. 6 is a plan view of the mower unit.
FIG. 7 is a perspective view of the mower unit as viewed from a front outside to a rear side.
FIG. 8 is a side view of the mower unit of the work vehicle with the cylinder cover attached thereto.
FIG. 9 is a perspective view of the right front portion of the mower unit.
FIG. 10 is a perspective view of the mower unit as viewed from a front side to the right side.
FIG. 11 is a perspective view of the mower unit as viewed from the inside to the right side.
FIG. 12 is a plan view of the mower unit.
FIG. 13A and 13B are plan views of a scale plate of the mower unit.
FIG. 14A and 14B are explanatory views of a stroke of an indicator of the mower unit.
FIG. 15A and 15B are diagrams showing an initial position of the indicator of the mower unit.
FIG. 16A and 16B are explanatory views of characters on the scale plate of the mower unit.
FIG. 17 is an explanatory view of a rotation pitch of the indicator of the mower unit.
FIG. 18 is one schematic side view showing a horizontal state of a deck portion when a height of the mower unit is adjusted.
FIG. 19 is another schematic side view showing the horizontal state of the deck portion when the height of the mower unit is adjusted.

### DESCRIPTION OF THE PREFERRED EMBODIMENTS

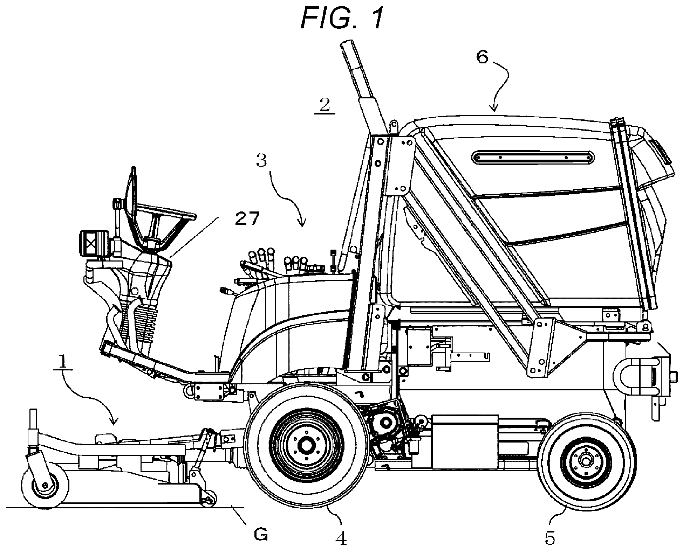

Hereinafter, an embodiment of the invention will be described in detail with reference to the drawings. FIG. 1 shows a lawn mower as an example of a work vehicle according to the embodiment of the invention. In the following description, front-back, left-right, and up-down directions are defined based on a travel direction of the lawn mower.

As shown in FIG. 1, the lawn mower according to the present embodiment includes a mower unit 1 below a front part of a traveling vehicle body 2. A reference numeral 3 denotes a driving seat, and reference numerals 4 and 5 denote a front wheel and a rear wheel, respectively. In addition, the lawn mower includes, at a rear side thereof, a collector for temporarily accommodating cut grass. G is ground.

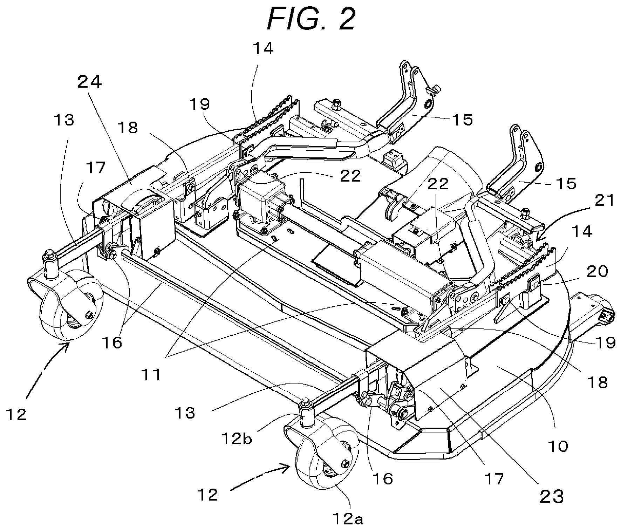

A structure of the mower unit 1 will be described in detail below with reference to FIG. 2.

That is, FIG. 2 is a perspective view of the mower unit 1 according to the present embodiment. As shown in FIG. 2, the mower unit 1 includes a deck portion 10, a mowing mechanism 11, front wheel portions 12 and 12, front wheel arm portions 13 and 13, rear arm portions 14 and 14, and lifting arms 15 and 15.

In the deck portion 10, a cutting blade of the mowing mechanism 11 is accommodated below a top surface, and a power unit of the mowing mechanism 11, the front wheel arm portions 13, the rear arm portions 14, the lifting arms 15, and the like are disposed above the top surface in a state of being exposed to an outside.

The mowing mechanism 11 includes a power source such as a motor, the motor is operated by power supplied from the traveling vehicle body 2, and thereby the cutting blade is rotated to mow the grass.

The front wheel portion 12 is provided on a front side of the deck portion 10, and supports the front wheel arm portion 13 when the auxiliary wheel 12a comes into contact with the ground G during the mowing. In addition, the front wheel portion 12 includes a rotation mechanism 12b in which a rotation axis along an up-down direction is rotatably provided. The rotation mechanism 12b is connected to the auxiliary wheel 12a, and rotates following traveling of the traveling vehicle body 2 in the travel direction, thereby directing a direction of the auxiliary wheel 12a toward the travel direction.

The front wheel arm portion 13 is provided above the deck portion 10, and one end (front end side) on a front side is connected to the front wheel portion 12, and the other end (rear end side) on a rear side is connected to the rear arm portion 14. Further, the front wheel arm portion 13 swings with respect to the deck portion 10 around a first connecting fulcrum 18 having a swing shaft along a left-right direction of the traveling vehicle body 2.

Specifically, the first connecting fulcrum 18 is disposed close to a rear side between the front wheel portion 12 and the rear arm portion 14.

The rear arm portion 14 is disposed on a rearward extension line of the front wheel arm portion 13 in a front-rear direction. Specifically, a front end side of the rear arm portion 14 is connected to the rear end side of the front wheel arm portion 13 via a rotation connecting portion 19.

The rear arm portion 14 is swingably connected to the deck portion 10 at a second connecting fulcrum 20 located rearward than the front end side of the rear arm portion 14. Further, a rear end side of the rear arm portion 14 is connected to the lifting arm 15 so as to be rotatable with the left-right direction as a rotation axis. Accordingly, the rear arm portion 14 swings in conjunction with the swing of the front wheel arm portion 13.

Meanwhile, the lifting arm 15 is connected to the traveling vehicle body 2, and raises and lowers the deck portion 10 by power supplied from the traveling vehicle body 2. Specifically, a front end portion 22 of the lifting arm 15 is rotatably connected to the deck portion 10, and the lifting arm 15 is rotatably connected to the rear arm portion 14 via a horizontal mechanism 21 on a rear side. Accordingly, the deck portion 10 is raised and lowered in accordance with raising and lowering of the lifting arm 15.

When the lifting arm 15 is raised, a front portion of the deck portion 10 and the front wheel arm portion 13 are lifted up, and the front wheel portion 12 is separated from the ground G. At this time, the front wheel arm portion 13 and the rear arm portion 14 are in a posture of being protruded upward at the rotation connecting portion 19.

On the other hand, when the lifting arm 15 is lowered from such a state, the front wheel portion 12 comes into contact with the ground G first. Then, at the same time that the front wheel portion 12 comes into contact with the ground G, the protruding shape formed by the front wheel arm portion 13 and the rear arm portion 14 becomes gentle.

In this way, a height on the front side of the deck portion 10 is substantially fixed. Then, when the lifting arm 15 is further lowered after the height of the deck portion 10 is substantially fixed, the horizontal mechanism 21 and the front end portion 22 of the lifting arm 15 are rotated to release energy generated in the deck portion 10 by the lowering.

At this time, when the horizontal mechanism 21 is a screw type, an angle of the deck portion 10 with respect to the ground G is determined by a degree of fastening of a screw.

Next, a mechanism for changing a mowing height will be described. That is, mowing height cylinders 17 that change a positional relationship between lower ends of the front wheel portions 12 and 12 and a lower end of the deck portion 10 are connected to the front wheel arm portions 13 and 13 via link mechanisms 16 and 16, respectively. The mowing height cylinders 17 are provided at the front portion of the deck portion 10.

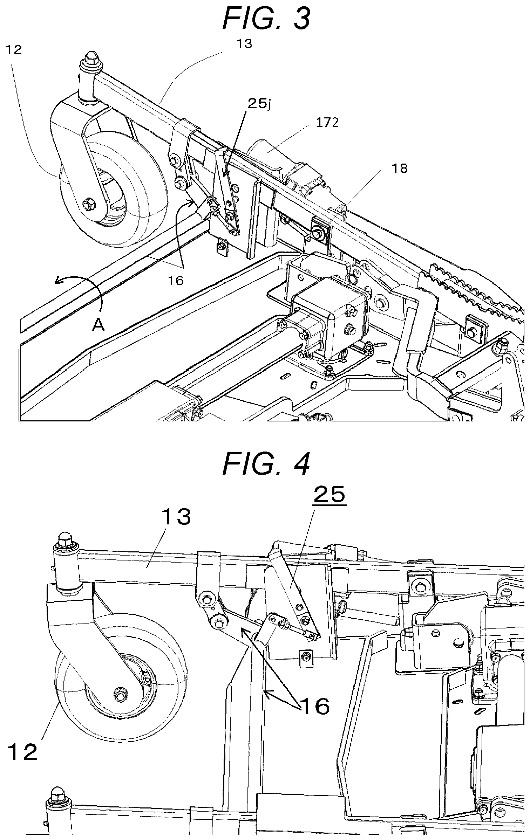

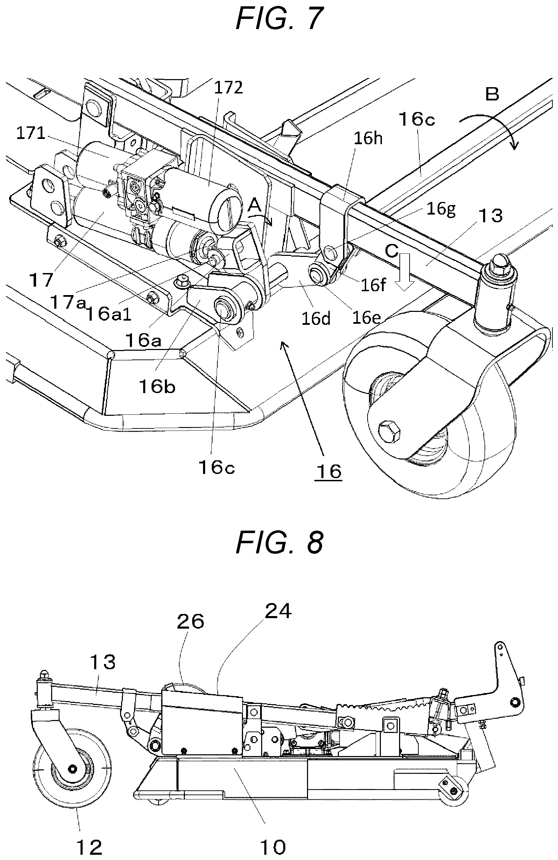

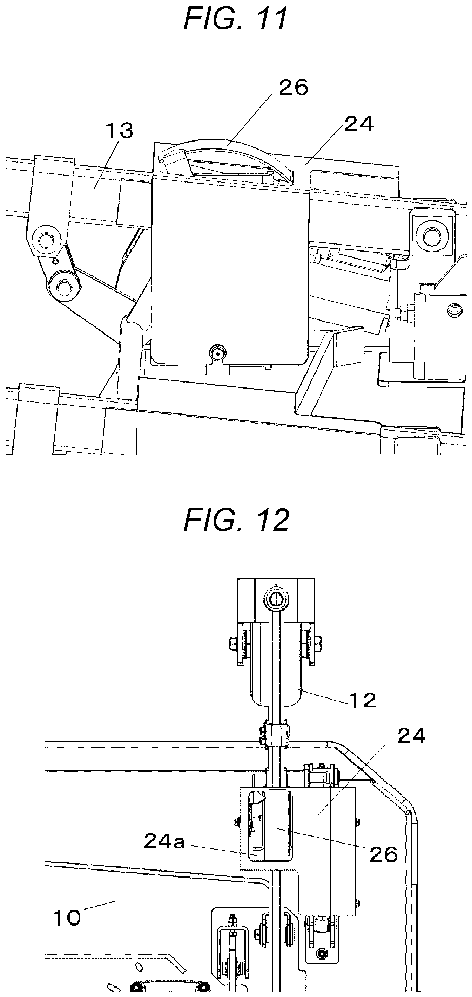

FIGS. 3 to 12 are views showing a right side of the mower unit 1. FIGS. 3 to 7 are views showing the right side of the mower unit 1 from which a right cylinder cover 24 is removed, and FIGS. 8 to 12 are views showing the right side of the mower unit 1 to which the right cylinder cover 24 is attached. Reference numeral 23 denotes a left cylinder cover located on a left side.

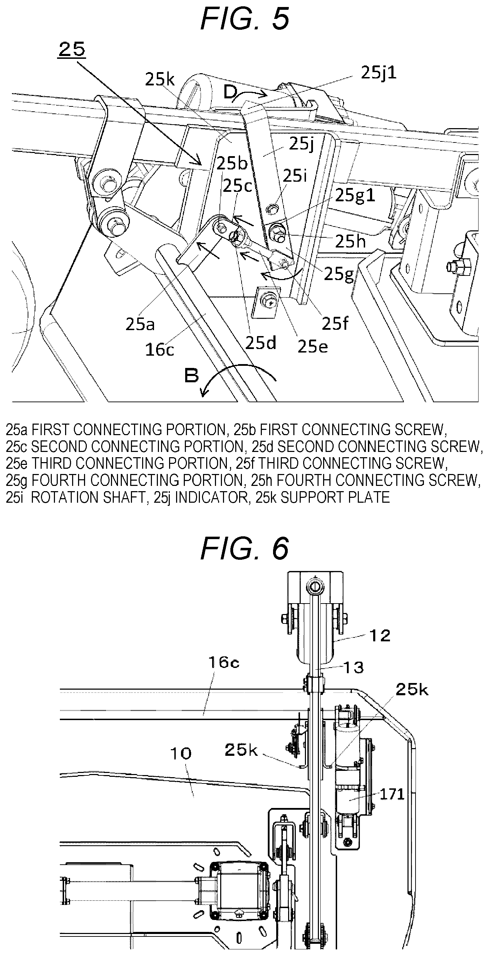

FIG. 3 is a perspective view when viewed from a rear side to a front side. FIG. 4 is a perspective view when viewed from substantially an inside to the right side. FIG. 5 is an enlarged view of a part of FIG. 4. FIG. 6 is a plan view, and FIG. 7 is a perspective view when viewed from a front outside to the rear side.

In these drawings, the link mechanism 16 will be described mainly with reference to FIG. 7. The link mechanisms 16 have the same structure on left and right sides of the front portion the deck portion 10, and each includes a first connecting fitting 16a, a connecting shaft 16c, a bracket 16b, a first connecting metal fitting 16d, a first connecting bolt 16e, a second connecting metal fitting 16f, a second connecting bolt 16g, and a third connecting metal fitting 16h.

That is, the first connecting fitting 16a having a 9-shaped cross section (an upper portion has a box shape and a lower portion is a plate portion) is provided on a mowing height cylinder 17 side. The connecting shaft 16c penetrates the plate portion as the lower portion of the first connecting fitting 16a. The connecting shaft 16c is mounted on the front portion of the deck portion 10 so as to extend between the left and right sides, and is shared by the left and right link mechanisms 16 and 16.

Left and right ends of the connecting shaft 16c are rotatably supported by the brackets 16b and 16b on the left and right sides of the deck portion 10, respectively.

The first connecting metal fittings 16d are fixed to the connecting shaft 16c at positions close to the both ends of the connecting shaft 16c. Further, the second connecting metal fitting 16f is rotatably connected to the first connecting metal fitting 16d via the first connecting bolt 16e, and the third connecting metal fitting 16h is rotatably connected to the second connecting metal fitting 16f via the second connecting bolt 16g.

The third connecting metal fitting 16h is fixed to the front wheel arm portion 13. Meanwhile, a front end of a rod 17a of the mowing height cylinder 17 is rotatably connected to the first connecting fitting 16a. That is, the front end of the rod 17a is inserted into the box-shaped portion at the upper portion of the 9-shaped cross section, and is rotatably connected to a shaft 16a1 in the box-shaped portion.

A reference numeral 171 denotes a DC motor that drives the mowing height cylinder 17, and a reference numeral 172 denotes an oil tank.

Here, a mechanism for adjusting the height of the deck portion 10 with respect to the ground G using the mowing height cylinder 17 will be described.

When the motor 171 is driven by a predetermined amount by a mowing height adjustment switch 27 (see FIG. 1), the rod 17a of the mowing height cylinder 17 extends and contracts to a predetermined position. As a result, the shaft 16a1 in the box-shaped portion connected to the front end of the rod 17a moves, and the first connecting fitting 16a rotates to a predetermined position. Since the first connecting fitting 16a is fixed to the connecting shaft 16c, the connecting shaft 16c rotates by a predetermined amount. As a result, the first connecting metal fittings 16d fixed to both ends of the connecting shaft 16c are rotated. Due to the rotation, the second connecting metal fitting 16f is rotated via the first connecting bolt 16e. Due to the rotation, the third connecting metal fitting 16h is rotated via the second connecting bolt 16g and moves to a predetermined position. The rotational movement of the third connecting metal fitting 16h causes the front wheel arm portion 13 to move.

For example, when the rod 17a of the mowing height cylinder 17 extends, the first connecting fitting 16a rotates as indicated by an arrow A. Due to the rotation, the fixed connecting shaft 16c rotates in a direction of an arrow B. Due to the rotation, the first connecting metal fitting 16d rotates downward. Accordingly, the second connecting metal fitting 16f is pulled downward, and the third connecting metal fitting 16h also moves downward. As a result, the front wheel arm portion 13 moves downward as indicated by an arrow C. As a result, the front wheel portions 12 and 12 also move downward.

Herein, the connecting shaft 16c is rotatably supported on the deck portion 10 by the bracket 16b, and a fact that the front wheel portion 12 is moved downward due to the rotation of the members described above means that a deck portion 10 side is moved upward with respect to a front wheel portion 12 side. That is, when a lower end of the front wheel portion 12 is in contact with the ground G, the lower end of the deck portion 10 is at a high position with respect to the ground G, and the mowing height increases.

On the other hand, when the rod 17a of the mowing height cylinder 17 is contracted, the front wheel arm portion 13 moves upward due to the reverse rotation, and the lower end of the deck portion 10 is at a low position with respect to the ground G.

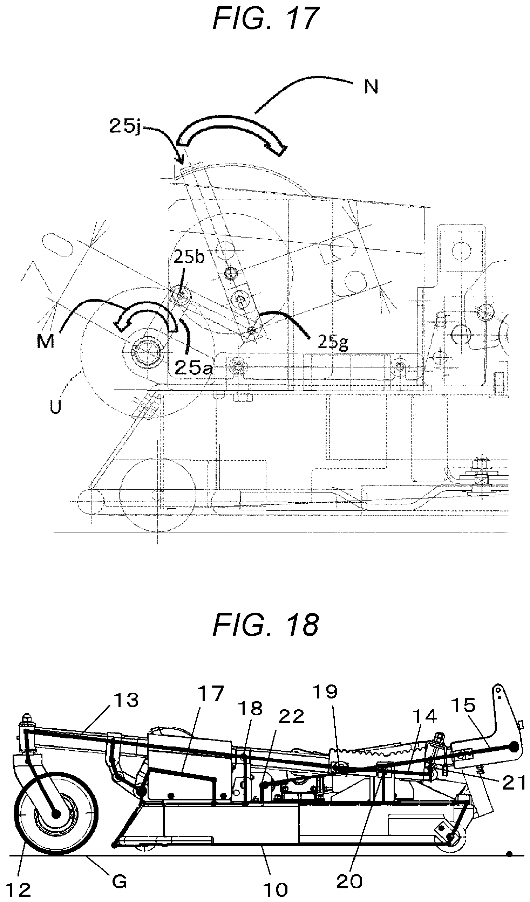

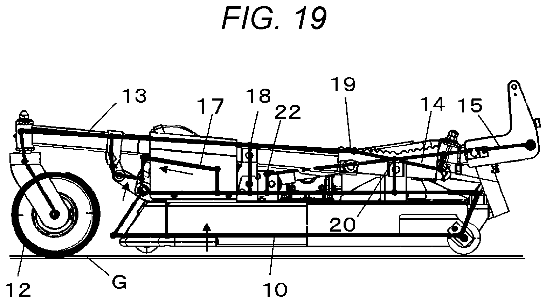

FIG. 18 is a schematic side view showing the low position, and a frame of each portion is schematically shown by a thick line. FIG. 19 is a schematic side view showing the lower end of the deck portion 10 is at the high position. As shown in FIGS. 18 and 19, even when the mowing height is changed by the cylinders 17, a horizontal state of the deck portion 10 is maintained by the rotation and the movement of the members such as the lifting arms 15, the front end portions 22 of the lifting arms 15, the horizontal mechanisms 21, the rear arm portions 14, the second connecting fulcrums 20, the rotation connecting portions 19, the first connecting fulcrums 18, and the front wheel arm portions 13.

That is, the positional relationship between the lower ends of the front wheel portions 12 and the lower end of the deck portion 10, specifically, a height of the lower end of the deck portion 10 is uniquely determined even when the mowing height is changed and adjusted.

Next, a mechanism in which how much the mowing height changed by the mowing height cylinder 17 as described above is adjusted can be easily confirmed will be described.

As shown in FIG. 5, an indicator mechanism 25 is provided on a right side above the deck portion 10. The indicator mechanism 25 includes a first connecting portion 25a, a first connecting screw 25b, a second connecting portion 25c, a second connecting screw 25d, a third connecting portion 25e, a third connecting screw 25f, a fourth connecting portion 25g, a fourth connecting screw 25h, a rotation shaft 25i, an indicator 25j, and a support plate 25k.

That is, the first connecting portion 25a is a plate piece fixed to the connecting shaft 16c, and the second connecting portion 25c is rotatably connected to the first connecting portion 25a by the first connecting screw 25b. The second connecting portion 25c is an L-shaped metal fitting, and is connected to one end of the rod-shaped third connecting portion 25e by the second connecting screw 25d. Further, the other end of the third connecting portion 25e is rotatably connected to the plate-shaped fourth connecting portion 25g by the third connecting screw 25f.

Further, the plate-shaped fourth connecting portion 25g is fixed to the plate-shaped indicator 25j by the fourth connecting screw 25h. The indicator 25j is supported by the rotation shaft 25i so as to be rotatable with respect to the support plate 25k. The support plate 25k is erected on the deck portion 10.

Here, an upper end of the indicator 25j is bent outward in a right direction, and a front end 25j1 has a triangular shape.

The indicator 25j moves as follows. As described above, when the rod 17a of the mowing height cylinder 17 extends, the connecting shaft 16c rotates in the direction of the arrow B. As a result, the first connecting portion 25a fixed to the connecting shaft 16c rotates in a direction of an arrow (counterclockwise direction in the drawing), and the second connecting portion 25c and the third connecting portion 25e are pulled by the first connecting portion 25a and move in directions of arrows.

Accordingly, the fourth connecting portion 25g rotates clockwise with the rotation shaft 25i as a fulcrum. As a result, the indicator 25j also rotates in the clockwise direction as indicated by an arrow D. That is, the front end 25j1 of the indicator 25j moves rearward.

On the other hand, when the rod 17a of the mowing height cylinder 17 is contracted, the front end 25j1 of the indicator 25j moves forward due to the reverse rotation.

Next, the right cylinder cover 24 as shown in FIGS. 8 to 12 will be described. The right cylinder cover 24 has a box shape, and is fixed to the deck portion 10 by a screw 24b in a state of covering an outer side portion of the mowing height cylinder 17, an upper side of the front wheel arm portion 13, and the indicator mechanism 25. The left cylinder cover 23 covers the outer side portion of the mowing height cylinder 17 and the upper side of the front wheel arm portion 13.

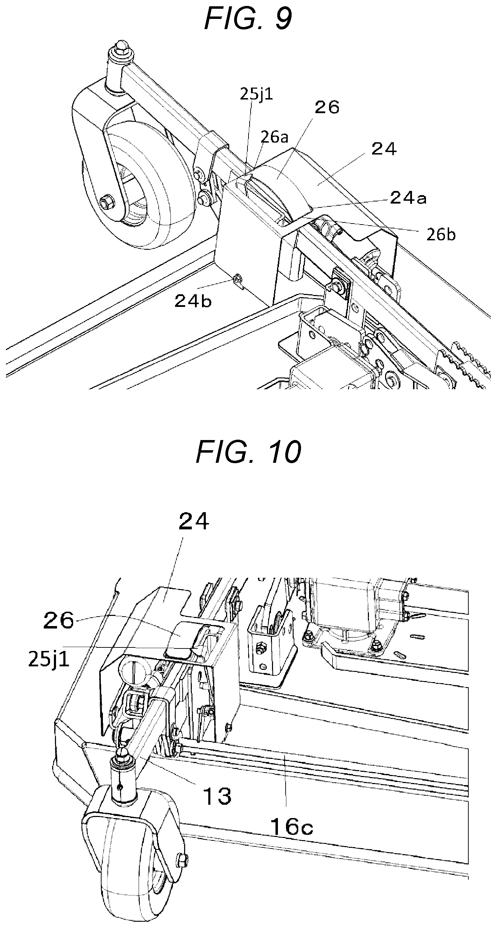

Further, a rectangular cutout window 24a is provided on an upper surface of the right cylinder cover 24, and the front end 25j1 of the indicator 25j protrudes from a left half portion of the window 24a. Further, a scale plate 26 curved in an upward protruding shape is attached to a right half portion of the window 24a. That is, a front end 26a and a rear end 26b of the scale plate 26 are fixed to the right cylinder cover 24, and the scale plate 26 is integrated with the right cylinder cover 24 (see FIG. 9). Accordingly, the scale plate 26 can protect the mowing height cylinder 17 and the indicator mechanism 25.

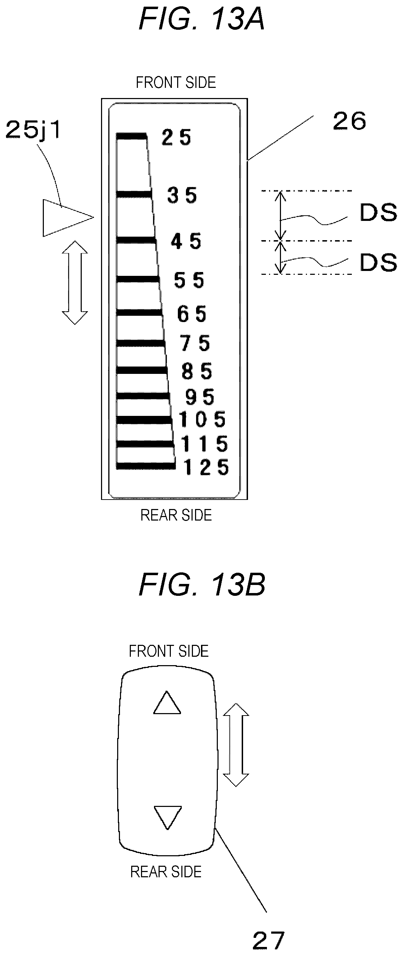

FIGS. 13A and 13B are plan views of the scale plate 26. A scale (in units of mm) indicating the height of the deck portion 10 from the ground G is marked. In the present embodiment, the scale is indicated in units of 10 mm. An adjustment of less than 10 mm is made by an operator by sense. Further, in a state where the scale plate 26 is mounted, a numerical value of a memo become smaller (lower) toward a front side and become larger toward a rear side.

As described above, since a movement of the front end 25j1 of the indicator 25j corresponds to the adjustment change of the mowing height of the deck portion 10 caused by the expansion and contraction of the rod 17a of the mowing height cylinder 17, the current mowing height can be visually recognized at a glance by adjusting each connecting portion and the scale itself such that a scale value of the scale plate 26 pointed to by the front end 25j1 of the indicator 25j indicates the mowing height at that time.

The scale plate 26 will be further described below.

As shown in FIG. 13A, display intervals DS, DS, DS, ... of the scale increase as the mowing height decreases. Accordingly, the closer to the ground G, the more finely the height can be adjusted.

Further, a movement direction (front-rear direction) of the front end 25j1 of the indicator 25j corresponds to a direction of a switch operation of the mowing height adjustment switch 27 (an example of a mowing height operation tool of the invention). That is, when the mowing height adjustment switch 27 is pushed forward, the front end 25j1 also moves forward, and when the mowing height adjustment switch 27 is pushed backward, the front end 25j1 also moves backward. The mowing height adjustment switch 27 is provided on an operation panel of the driving seat 3 of the traveling vehicle body 2.

The indicator mechanism 25 can adjust the movement of the front end 25j1 of the indicator 25j, which is to accurately adjust a welding tolerance and an assembly tolerance between the deck portion 10 and the cylinder 17 or the link mechanism 16.

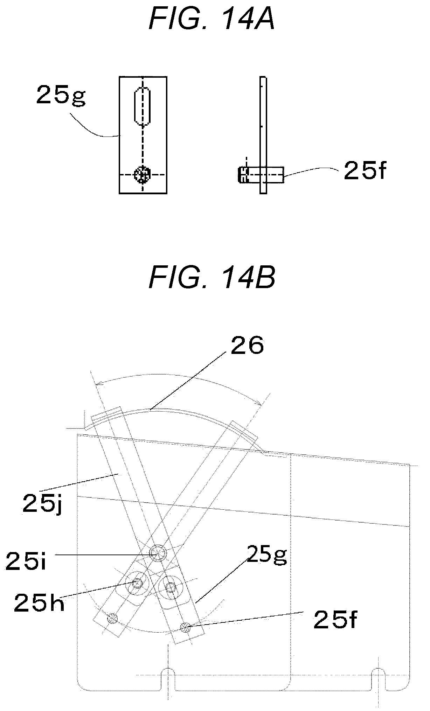

That is, as shown in FIG. 5, the indicator 25j and the fourth connecting portion 25g are connected to each other by the fourth connecting screw 25h. A long hole 25g1 is bored in the fourth connecting portion 25g, and a stroke of the indicator 25j can be adjusted by adjusting a position at which the fourth connecting screw 25h is screwed. FIG. 14A shows a front view and a side view of the fourth connecting portion 25g, and FIG. 14B shows the stroke.

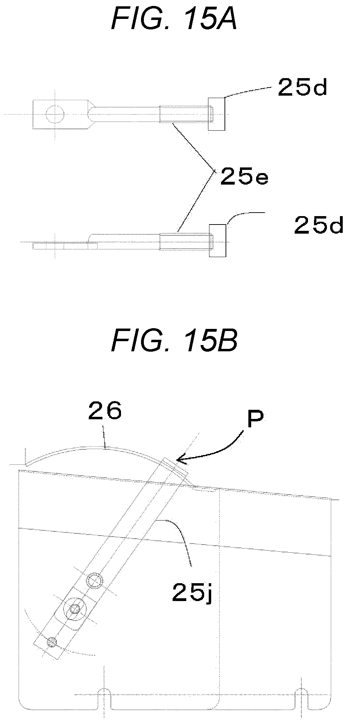

Further, as shown in FIGS. 15A and 15B, by adjusting the second connecting screw 25d, an initial position of the indicator 25j can be adjusted to coincide with the scale of the scale plate 26. FIG. 15A shows the third connecting portion 25e and the second connecting screw 25d, and FIG. 15B shows an initial position (P) of the indicator 25j.

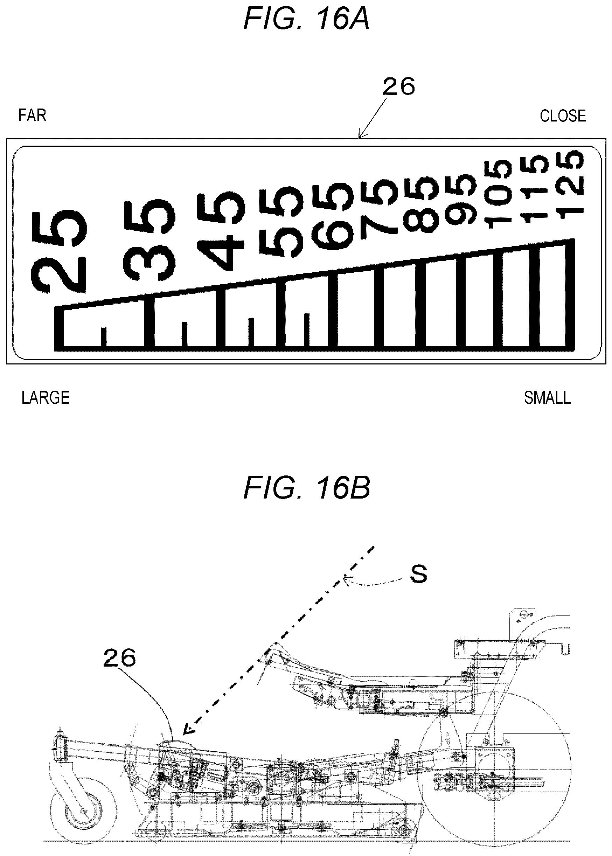

Further, as shown in FIGS. 16A and 16B, a size of characters of the scale of the scale plate 26 is set such that a scale on a far side, that is, a scale of a lower mowing height in the present embodiment, is larger in size than that of a scale of a high mowing height in consideration of a line of sight (S) from the driving seat 3. It is possible to make it easier to see a position far from the driving seat 3, and in particular, to make it easier to adjust the lower mowing height.

Further, as shown in FIG. 8, it is preferable that the upper surfaces of the right cylinder cover 24 and the left cylinder cover 23 are inclined obliquely downward from a front side to a rear side. Accordingly, when the grass rides on the covers 23 and 24 during the operation, the grass can slip down to a rear side of the traveling vehicle body 2.

Further, as shown in FIG. 8, the scale plate 26 is formed in an upwardly protruding arc shape. Accordingly, it can be expected that the grass slides down even when the grass rides on the scale plate 26. The scale can be easily seen from the driving seat 3.

Further, as shown in FIG. 17, a rotation pitch M of the first connecting portion 25a is set to be constant, a rotation pitch N of the indicator 25j is set to a rotation pitch that is not constant. For example, even if the rotation pitch M is set to be constant, the rotation pitch N can be gradually changed from a large state to a small state. That is, when the first connecting screw 25b moves in an upper portion of a circular path U drawn by the first connecting screw 25b in a state where the rotation pitch M is constant, the movement of the fourth connecting portion 25g, that is, the movement of the indicator 25j is also large, and when the first connecting screw 25b is directed downward, the movement of the fourth connecting portion 25g starts to decrease, that is, the movement of the indicator 25j also decreases. In this way, the rotation pitch N can be set to the rotation pitch that is not constant.

By this contrivance, it is possible to implement the scale of the scale plate 26 in which when a pitch interval is small, the mowing height is high, and when the pitch interval is large, the mowing height is low as shown in FIGS. 13A. That is, the indicator 25j is configured to move more at a position where a mowing height adjustment position is low than at a position where the mowing height adjustment position is high, and the interval of the scales pointed to by the indicator 25j is set to be larger at a position where the mowing height adjustment position is low than at a position where the mowing height adjustment position is high. In this way, the indicator 25j is set to move more at the position where the mowing height adjustment position is low than at the position where the mowing height adjustment position is high, and it is possible to easily confirm how much the mowing height is adjusted in fine adjustment at the position where the mowing height adjustment position is low.

Further, as shown in FIGS. 5 and 6, the two support plates 25k, which are L-shaped plates, are erected on the deck portion 10 so as to face each other. An interval space between the two support plates 25k is filled with the front wheel arm portion 13 in a free state. The support plate 25k functions to prevent the front wheel arm portion 13 from shaking in the left-right direction.

As described above, the indicator 25j is rotatably attached to the inner support plate 25k by the rotation shaft 25i. Therefore, the scale plate 26 can be disposed above the front wheel arm portion 13, and can be disposed at a position that can be easily seen from the driving seat 3. In addition, with such a configuration, the cylinders 17 and the link mechanisms 16 can be accommodated in the cylinder covers 23 and 24, and both can be protected.

The cylinder 17 is not limited to being driven by a motor.

### Industrial Applicability

The invention can provide a work vehicle in which how much a current mowing height is adjusted can be easily confirmed, and therefore is optimal for a mower.

To provide a work vehicle in which how much a current mowing height is adjusted can be easily confirmed. The work vehicle includes a traveling vehicle body 2 and a mower unit 1 provided at the traveling vehicle body 2. The mower unit 1 includes: a deck portion 10 on which a mowing mechanism that mows grass is provided; a front wheel portion 12 provided in front of the deck portion 10 and configured to be in contact with ground during mowing work; a front wheel arm portion 13 connected, on a front end side thereof, to the front wheel portion 12 and swingably provided on the deck portion 10; a mowing height cylinder 17 connected to the front wheel arm portion 13 via a link mechanism 16 and configured to change a positional relationship between a lower end of the front wheel portion 12 and a lower end of the deck portion 10; and an indicator 25j configured to move in conjunction with the mowing height cylinder 17. The traveling vehicle body 2 includes a mowing height operation tool 27 configured to operate the mowing height cylinder 17.

## Claims

1. A work vehicle comprising:
a traveling vehicle body (2); and
a mower unit (1) provided at the traveling vehicle body (2), wherein
the mower unit (1) includes: a deck portion (10) on which a mowing mechanism (11) that mows grass is provided, and a front wheel portion (12) provided in front of the deck portion (10) and configured to be in contact with ground during mowing work, and
the traveling vehicle body (2) includes a mowing height operation tool (27),
**characterized in that**
the mower unit (1) further includes:
a front wheel arm portion (13) connected, on a front end side thereof, to the front wheel portion (12) and swingably provided on the deck portion (10),
a mowing height cylinder (17) connected to the front wheel arm portion (13) via a link mechanism (16) and configured to change a positional relationship between a lower end of the front wheel portion (12) and a lower end of the deck portion (10), and
an indicator (25j) configured to move in conjunction with the mowing height cylinder (17),
wherein the mowing height operation tool (27) is configured to operate the mowing height cylinder (17).

2. The work vehicle according to claim 1, wherein
the mower unit (1) is provided in front of the traveling vehicle body (2), the mowing height cylinder (17) is provided on a front portion of the deck portion (10), the front wheel arm portion (13) is provided above the deck portion (10), and a cylinder cover (24) is provided to cover at least a lateral side of the mowing height cylinder (17) and an upper side of the front wheel arm portion (13), and
the indicator (25j) indicates a current mowing height by pointing to a scale of a scale plate (26) provided on the cylinder cover (24).

3. The work vehicle according to claim 1 or 2, wherein
the indicator (25j) is configured to move more at a position where a mowing height adjustment position is low than at a position where the mowing height adjustment position is high, and an interval between scales pointed to by the indicator (25j) is larger at the position where the mowing height adjustment position is low than at the position where the mowing height adjustment position is high.

4. The work vehicle according to claim 3, wherein
a scale indicating a position where a mowing height is low is displayed on a front side far from a driving seat (3), and a scale indicating a position where the mowing height is high is displayed on a rear side close to the driving seat (3), and
a scale number indicating the position where the mowing height is low is displayed to be larger in size than a scale number indicating the position where the mowing height is high.

## Patentansprüche

1. Arbeitsfahrzeug mit:
einem fahrenden Fahrzeugkörper (2); und
einer Mäheinheit (1), die an dem fahrenden Fahrzeugkörper (2) vorgesehen ist, wobei
die Mäheinheit (1) Folgendes aufweist: einen Plattformabschnitt (10), auf dem ein Mähmechanismus (11) vorgesehen ist, der Gras mäht, und einen Vorderradabschnitt (12), der vor dem Plattformabschnitt (10) vorgesehen ist und so konfiguriert ist, dass er während der Mäharbeit mit dem Boden in Kontakt ist, und
der fahrende Fahrzeugkörper (2) ein Mähhöhenbedienungsinstrument (27) aufweist,
**dadurch gekennzeichnet, dass**
die Mäheinheit (1) außerdem Folgendes aufweist:
einen Vorderrad-Armabschnitt (13), der auf seiner Vorderendenseite mit dem Vorderradabschnitt (12) verbunden ist und der auf dem Plattformabschnitt (10) schwenkbar vorgesehen ist,
einen Mähhöhenzylinder (17), der mit dem Vorderrad-Armabschnitt (13) über einen Verbindungsmechanismus (16) verbunden ist und der so konfiguriert ist, dass er einen Positionszusammenhang zwischen einem unteren Ende des Vorderradabschnitts (12) und einem unteren Ende des Plattformabschnitts (10) ändert, und
einen Indikator (25j), der so konfiguriert ist, dass er sich in Verbindung mit dem Mähhöhenzylinder (17) bewegt,
wobei das Mähhöhenbedienungsinstrument (17) so konfiguriert ist, dass es den Mähhöhenzylinder (17) betätigt.

2. Arbeitsfahrzeug nach Anspruch 1, wobei
die Mäheinheit (1) vor dem fahrenden Fahrzeugkörper (2) vorgesehen ist, der Mähhöhenzylinder (17) auf einem vorderen Abschnitt des Plattformabschnitts (10) vorgesehen ist, der Vorderrad-Armabschnitt (13) oberhalb des Plattformabschnitts (10) vorgesehen ist und eine Zylinderabdeckung (24) so vorgesehen ist, dass sie zumindest eine Querseite des Mähhöhenzylinders (17) und eine Oberseite des Vorderrad-Armabschnitts (13) bedeckt, und
der Indikator (25j) eine aktuelle Mähhöhe angibt, indem er auf eine Skala einer Skalenplatte (26) zeigt, die auf der Zylinderabdeckung (24) vorgesehen ist.

3. Arbeitsfahrzeug nach Anspruch 1 oder 2, wobei
der Indikator (25j) so konfiguriert ist, dass sich an einer Position, an der eine Mähhöheneinstellposition niedrig ist, mehr als an einer Position bewegt, an der eine Mähhöheneinstellposition hoch ist, und ein Abstand zwischen Skalen, auf die der Indikator (25j) zeigt, an der Position, an der die Mähhöheneinstellposition niedrig ist, größer als an der Position ist, an der die Mähhöheneinstellposition hoch ist.

4. Arbeitsfahrzeug nach Anspruch 3, wobei
eine Skala, die eine Position angibt, an der eine Mähhöhe niedrig ist, auf einer Vorderseite fern von einem Fahrersitz (3) angezeigt wird und eine Skala, die eine Position angibt, an der die Mähhöhe hoch ist, auf einer Rückseite nahe am Fahrersitz (3) angezeigt wird, und
eine Skalenziffer, die die Position angibt, an der die Mähhöhe niedrig ist, größer als eine Skalenziffer angezeigt wird, die die Position angibt, an der die Mähhöhe hoch ist.

## Revendications

1. Véhicule de travail comprenant :
un corps de véhicule de déplacement (2) ; et
une unité de fauchage (1) prévue sur le corps de véhicule de déplacement (2), dans laquelle
l'unité de fauchage (1) comprend : une partie de plateforme (10) sur laquelle un mécanisme de fauchage (11) qui fauche l'herbe est prévu, et une partie de roue avant (12) prévue à l'avant de la partie de plateforme (10) et configurée pour être en contact avec le sol pendant le travail de fauchage, et
le corps de véhicule de déplacement (2) comprend un outil d'actionnement de hauteur de fauchage (27),
**caractérisée en ce que**
l'unité de fauchage (1) comprend en outre :
une partie de bras de roue avant (13) reliée, sur un côté d'extrémité avant de celle-ci, à la partie de roue avant (12) et prévue de manière pivotante sur la partie de plateforme (10),
un cylindre de hauteur de fauchage (17) relié à la partie de bras de roue avant (13) par un mécanisme de liaison (16) et configuré pour modifier une relation de position entre une extrémité inférieure de la partie de roue avant (12) et une extrémité inférieure de la partie de plateforme (10), et
un indicateur (25j) configuré pour se déplacer conjointement avec le cylindre de hauteur de fauchage (17),
dans lequel l'outil d'actionnement de hauteur de fauchage (27) est configuré pour actionner le cylindre de hauteur de fauchage (17).

2. Véhicule de travail selon la revendication 1, dans lequel
l'unité de fauchage (1) est prévue à l'avant du corps de véhicule de déplacement (2), le cylindre de hauteur de fauchage (17) est prévu sur une partie avant du partie de plateforme (10), la partie de bras de roue avant (13) est prévue au-dessus de la partie de plateforme (10), et un couvercle de cylindre (24) est prévu pour couvrir au moins un côté latéral du cylindre de hauteur de fauchage (17) et un côté supérieur de la partie de bras de roue avant (13), et
l'indicateur (25j) indique une hauteur de fauchage actuelle en pointant vers une échelle d'une plaque d'échelle (26) prévue sur le couvercle de cylindre (24).

3. Véhicule de travail selon la revendication 1 ou 2, dans lequel
l'indicateur (25j) est configuré pour se déplacer davantage dans une position à laquelle une position de réglage de hauteur de fauchage est basse que dans une position à laquelle la position de réglage de hauteur de fauchage est haute, et un intervalle entre les échelles vers lesquelles l'indicateur (25j) pointe est plus grand dans la position à laquelle la position de réglage de hauteur de fauchage est basse que dans la position à laquelle la position de réglage de hauteur de fauchage est haute.

4. Véhicule de travail selon la revendication 3, dans lequel
une échelle indiquant une position à laquelle une hauteur de fauchage est basse est affichée sur un côté avant éloigné d'un siège conducteur (3), et une échelle indiquant une position à laquelle la hauteur de fauchage est haute est affichée sur un côté arrière proche du siège conducteur (3), et
un chiffre de l'échelle indiquant la position à laquelle la hauteur de fauchage est basse est affiché de manière à être plus grand qu'un chiffre de l'échelle indiquant la position à laquelle la hauteur de fauchage est haute.
